(19) Europäisches Patentamt
European Patent Office
Office européen des brevets

(11) EP 0 570 704 B1

## (12) EUROPÄISCHE PATENTSCHRIFT

(45) Veröffentlichungstag und Bekanntmachung des Hinweises auf die Patenterteilung:
**22.01.1997 Patentblatt 1997/04**

(51) Int Cl.6: **H02M 3/335**, H02J 9/06

(21) Anmeldenummer: **93106400.0**

(22) Anmeldetag: **20.04.1993**

(54) **Sperrwandler**

Flyback converter

Convertisseur à récupération

(84) Benannte Vertragsstaaten:
**AT BE CH DE DK ES FR GB GR IE IT LI NL PT SE**

(30) Priorität: **23.04.1992 AT 832/92**

(43) Veröffentlichungstag der Anmeldung:
**24.11.1993 Patentblatt 1993/47**

(73) Patentinhaber: **Siemens Aktiengesellschaft Österreich**
**1210 Wien (AT)**

(72) Erfinder:
- **Jacopich, Werner**
  **A-3441 Dietersdorf (AT)**
- **Riegler, Gerhard**
  **A-1220 Wien (AT)**

(74) Vertreter: **Fuchs, Franz-Josef, Dr.-Ing.**
**Postfach 22 13 17**
**80503 München (DE)**

(56) Entgegenhaltungen:
EP-A- 0 183 597          EP-A- 0 434 843
EP-A- 0 458 510          US-A- 5 010 469
US-A- 5 019 717

- **IBM TECHNICAL DISCLOSURE BULLETIN,**
  **Bd. 14, Nr. 1, Juni 1971, USA Seiten 68 - 69 'Power Line Disturbance Support Circuit'**
- **PATENT ABSTRACTS OF JAPAN vol. 14, no. 268 (E-939) 11. Juni 1990 & JP-A-02 084 028 (TOSHIBA CORP.) 26. März 1990**
- **PATENT ABSTRACTS OF JAPAN vol. 15, no. 502 (E-1147) 18. Dezember 1991 & JP-A-03 218 234 (YUASA BATTERY CO.) 25. September 1991**
- **PATENT ABSTRACTS OF JAPAN vol. 15, no. 502 (E-1147) 18. Dezember 1991 & JP-A-03 218 261 (FUJI ELECTROCHEM. CO.) 25. September 1991**

## Beschreibung

Die Erfindung betrifft einen Sperrwandler, bei welchem ein Übertrager und ein Schaltelement vorgesehen ist, welches in Serie mit einer Primärwicklung des Übertragers angeordnet ist.

Ein derartiger Sperrwandler ist beispielsweise einsetzbar, um aus einer Eingangsspannung eine oder mehrere Ausgangsspannungen zu erhalten. In einer Schaltphase des Sperrwandlers ist das Schaltelement geschlossen und es fließt ein Primärstrom in der Primärwicklung des Übertragers. In einer Sperrphase des Sperrwandlers ist das Schaltelement geöffnet, und es fließt ein Ausgangsstrom in der Sekundärwicklung des Übertragers. Zwischen den Stromzuführungspunkten soll ein Kondensator als niederohmige Spannungsquelle vorgesehen sein, um beim Einschalten des Schaltelementes einen steilen Stromanstieg zu ermöglichen.

Aus der europäischen Offenlegungsschrift EP 0 434 843 A1 ist ein Schaltumrichter mit einem Adapter für eine Zusatzspannungsquelle bekannt.

Es ist Aufgabe der Erfindung, einen weiteren Sperrwandler anzugeben, bei welchem insbesondere auch größere Spannungsschwankungen der Eingangsspannung ausgeglichen werden können.

Dieses Problem ist gelöst bei einem Sperrwandler gemäß den Merhmalen des Anspruchs 1,

- bei welchem ein Übertrager und ein Schaltelement vorgesehen ist, welches in Serie mit einer Primärwicklung des Übertragers angeordnet ist,
- bei welchem eine Spannungserzeugungseinheit vorgesehen ist zur Aufladung einer Energiespeichereinheit,
- bei welchem eine Zuschalteeinheit vorgesehen ist zum Anschalten der Energiespeichereinheit für die Weiterversorgung bei Unterschreitung einer minimalen Eingangsspannung.

Der Erfindung liegt die Idee zugrunde, daß im Normalbetrieb, also bei einer ausreichend hohen Eingangsspannung, eine Energiespeichereinheit aufgeladen wird. Erst bei einer Unterschreitung einer minimalen Eingangsspannung wird über die Zuschalteeinheit die Energiespeichereinheit für die Weiterversorgung zugeschaltet. Zu diesem Zeitpunkt soll die Energiespeichereinheit insbesondere während des vorangegangenen Normalbetriebes voll aufgeladen worden sein, sodaß jetzt für eine Überbrückung von Spannungseinbrüchen bei der Eingangsspannung eine besonders günstige Situation vorliegt. Auf dieses Weise ist beispielsweise bei einem Ausfall der Eingangsspannung für eine definierte Zeit die Weiterversorgung der Verbraucher am Ausgang des Sperrwandlers besonders vorteilhaft ermöglicht.

Weitere Vorteile ergeben sich daraus, daß die Spannungserzeugungseinheit, die Energiespeichereinheit und die Zuschalteeinheit nachrüstbar sind.

Ausführbar ist ein Sperrwandler, bei welchem ein erster Kondensator der Energiespeichereinheit zur Aufladung vorgesehen ist.

Einem aufgeladenen Kondensator ist die in ihm gespeicherte Energie entnehmbar. Beispielsweise bei einem Kondensator mit einer Kapazität C, welcher bis zu einer Spannung $U_{max}$ aufgeladen ist, und welchem Energie entnommen wird bis er zu einer Spannung $U_{min}$ entladen ist, errechnet sich die dabei entnommene Energie E insbesondere gemäß folgender Formel:

$$E = 0{,}5 \cdot C \cdot (U_{max}^{2} - U_{min}^{2})$$

Dies bedeutet, daß die gespeicherte Energie linear mit der Kapazität des Kondensators jedoch quadratisch mit der Spannung des Kondensators ansteigt. Die Baugröße eines Kondensators ist näherungsweise abhängig vom Produkt aus Spannung und Kapazität.

Um wirtschaftlich Energie zu speichern, also bei einer kleinen Baugröße im Sinne einer Reduzierung der Kosten und des Platzbedarfs, soll eine größtmögliche Spannung vorgesehen sein. Beispielsweise bei einem Sperrwandler für Stromversorgungen, welche einen großen Eingangsspannungsbereich aufweisen, kann ein von der Eingangsspannung unabhängiger Kondensator vorgesehen sein, welcher im Normalbetrieb auf die höchste zulässige Spannung des vorgesehenen Spannungseingangsbereichs aufgeladen werden soll. Insbesondere bei einem Ausfall der Eingangsspannung kann dann dieser aufgeladene Kondensator für die Weiterversorgung angeschaltet werden im Sinne einer verfügbaren Energiereserve. Beginnend bei der maximal zulässigen Eingangsspannung kann dieser Kondensator bei der Weiterversorgung entladen werden, bis er beispielsweise zur minimalen Eingangsspannung entladen ist. Sobald der Ausfall der Eingangsspannung beendet ist, also zumindest eine minimale Eingangsspannung wieder vorliegt, soll die Weiterversorgung beendet werden, sodaß erneut eine Aufladung des Kondensators der Energiespeichereinheit vorgesehen ist. Beispielsweise soll während einer Zeitdauer $t_{w}$ für einen Verbraucher im Sekundärkreis ein mittlerer Abgabestrom $I_{a}$ bei einer mittleren Abgabespannung $U_{a}$ verfügbar sein, also insbesondere im Sinne einer Mittelwertbildung gemäß $\Sigma (I_{a} \cdot U_{a})$, in dem zur Weiterversorgung dabei dieser Kondensator von einer maximalen Eingangsspannung $U_{max}$ des Eingangsspannungsbereichs entladen wird bis zu einer minimalen Eingangsspannung $U_{min}$ des Eingangsspannungsbereichs, und erfolgt diese Weiterversorgung mit einem Wirkungsgrad eta, so kann die für diesen Kondensator erforderliche Kapazität C insbesondere gemäß folgender Formel errechnet werden:

$$C = \frac{2 \cdot t_{w} \cdot \Sigma(I_{a} \cdot U_{a})}{(U_{max}^{2} - U_{min}^{2}) \cdot eta}$$

Weitere Vorteile ergeben sich bei einem derartigen Kondensator insbesondere dadurch daß eine große Brauchbarkeitsdauer erzielbar ist, also im Vergleich zu Batterien oder Akkus als aufladbare Energiespeicher.

Ausführbar ist ein Sperrwandler, bei welchem eine vervielfachende Gleichrichterschaltung der Spannungserzeugungseinheit vorgesehen ist zur Spannungserzeugung aus einer an einem ersten und einem zweiten Schaltungspunkt entnommenen Spannung der Primärwicklung.

In einer vorteilhaften Weise kann eine vervielfachende Gleichrichterschaltung eingesetzt werden zur Spannungserzeugung in der Spannungserzeugungseinheit, indem dabei ausgenutzt wird, daß sich die an der Primärwicklung auftretenede Spannung umpolt bei jeder Änderung des Schaltzustandes vom Schaltelement. Bei einem durchgeschalteten Schaltelement, also in einer Schaltphase des Sperrwandlers, ist eine Polung der Spannung an der Primärwicklung im Sinne der Eingangsspannung gegeben. Bei geöffnetem Schaltelement, also in einer Sperrphase des Sperrwandlers, ist die Spannung an der Primärwicklung umgepolt. Die Primärwicklung ist somit als quasi Sekundärwicklung benutzbar. Die umgepolte Spannung an der Primärwicklung während der Sperrphase ist abhängig vom Übersetzungsverhältnis des Übertragers. Dies bedeutet, daß bei einer vorgesehenen Ausgangsspannung normalerweise eine umgepolte Spannung während der Sperrphase auftritt, deren Betrag ungefähr gleich ist dem Betrag der minimalen Eingangsspannung. Um den ersten Kondensator auf die maximale Eingangsspannung aufladen zu können, soll demzufolge die vervielfachende Gleichrichterschaltung dienen. Eine derartige Anordnung ist insbesondere vorteilhaft kostengünstig gegenüber beispielsweise einer zur Aufladung der Energiespeichereinheit vorgesehenen zusätzlichen Wicklung am Übertrager.

Als vervielfachende Gleichrichterschaltung ist insbesondere eine von an sich bekannten Spannungsvervielfachungsschaltungen einsetzbar. Dies kann beispielsweise eine Greinacher-Kaskadenschaltung sein, bei welcher mehrere Gleichrichterstufen hintereinander geschaltet sind, welche mittels Dioden und Kondensatoren eine Spannungsvervielfachung in an sich bekannter Weise erzielen. Dieses Schaltungsprinzip ist beispielsweise zur Hochspannungserzeugung verwendbar. Vom Verhältnis der maximalen Eingangsspannung zur minimalen Eingangsspannung bei einem Sperrwandler ist die Anzahl der erforderlichen Gleichrichterstufen abhängig. Die Anzahl der benötigten Gleichrichterstufen soll so ausgelegt werden, daß bei minimaler Eingangsspannung eine Spannung am Energiespeicher anliegt, welche größer oder zumindest gleich der maximalen Eingangsspannung des Sperrwandlers ist. Beispielsweise bei einem kleinen vorgesehenen Eingangsspannungsbereich kann auch eine einzige Gleichrichterstufe bereits ausreichend sein. Bei einem großen Verhältnis zwischen maximaler Eingangsspannung und minimaler Eingangsspannung soll demzufolge eine entsprechend große Anzahl von Gleichrichterstufen vorgesehen sein.

Weitere Vorteile ergeben sich daraus, daß eine vervielfachende Gleichrichterschaltung bei einem Sperrwandler in einfacher Weise nachrüstbar ist, indem diese nur am ersten und zweiten Schaltungspunkt angeschlossen wird.

Ausführbar ist ein Sperrwandler,

- bei welchem ein positiver Pol des ersten Kondensators mit dem ersten Schaltungspunkt verbunden ist,
- bei welchem ein negativer Pol des ersten Kondensators mit dem zweiten Schaltungspunkt über die Gleichrichterschaltung verbunden ist,
- bei welchem eine erste Diode vorgesehen ist zwischen einem ersten Stromzuführungspunkt und dem ersten Schaltungspunkt mit einer vorgesehenen Stromrichtung vom ersten Stromzuführungspunkt zum ersten Schaltungspunkt,
- bei welchem das Schaltelement zwischen dem zweiten Schaltungspunkt und einem dritten Schaltungspunkt vorgesehen ist, welcher mit einem zweiten Stromzuführungspunkt verbunden ist,
- bei welchem über die Zuschalteeinheit der negative Pol des ersten Kondensators mit dem dritten Schaltungspunkt bei der Weiterversorgung verbunden ist.

In einer vorteilhaften Weise ist eine derartige Anordnung bei einem Sperrwandler in einfacher Weise nachrüstbar, indem diese an den drei Schaltungspunkten angeschlossen wird. Falls die erste Diode nicht ohnehin bereits vorhanden ist, so soll diese beim Nachrüsten wie angegeben eingefügt werden. Diese erste Diode verhindert eine Stromentnahme der Stromzuführungselemente bei der Weiterversorgung. Anstelle der ersten Diode könnte auch ein Schaltelement vorgesehen sein, mittels dessen die Stromzuführungselemente bei der Weiterversorgung abgetrennt werden.

Ausführbar ist ein Sperrwandler,

- bei welchem eine Eingangsspannungsüberwachungseinheit vorgesehen ist zur Überwachung der minimalen Eingangsspannung,
- bei welchem ein optisches Koppelelement zwischen der Eingangsspannungsüberwachungseinheit und der Zuschalteeinheit vorgesehen ist zur Weitergabe eines optischen Signales von der Eingangsspannungsüberwachungseinheit zur Zuschalteeinheit, indem dieses Signal nicht vorgesehen ist im Falle, daß die minimale Eingangsspannung unterschritten ist.

In einer vorteilhaften Weise ist eine Potentialtrennung mittels des optischen Signales in einfacher Weise erzielbar. Ein derartiges optisches Signal ist in einfacher Weise realisierbar, indem das optische Signal bei Vorliegen von zumindest der minimalen Eingangsspannung daraus erzeugt wird mit Hilfe der Eingangsspannungsüberwachungseinheit. Bei einem Ausfall der Eingangsspannung, also falls die minimale Eingangsspannung unterschritten ist, soll dieses optische Signal nicht vorliegen. Beispielsweise bei einem Sperrwandler, welcher eine Eingangsspannungsüberwachungseinheit mit einer optischen Anzeige insbesondere einer LED zur Sichtkontrolle einer normalen Funktionsweise bereits aufweist, sind nur geringfügige Ergänzungen beim Nachrüsten erforderlich, indem das optische Koppelelement beispielsweise zusätzlich zur optischen Anzeige an der Eingangsspannungsüberwachungseinheit angeschlossen wird.

Ausführbar ist ein Sperrwandler

- bei welchem ein N-Kanal-MOSFET der Zuschalteeinheit vorgesehen ist,
- bei welchem ein Drain des N-Kanal-MOSFET über eine zweite Diode mit dem dritten Schaltungspunkt verbunden ist, mit einer vorgesehenen Stromrichtung für die zweite Diode vom dritten Schaltungspunkt zum Drain,
- bei welchem eine Source des N-Kanal-MOSFET mit dem negativen Pol des ersten Kondensators verbunden ist,
- bei welchem ein Gate des N-Kanal-MOSFET einerseits über einen ersten Widerstand mit dem positiven Pol des ersten Kondensators verbunden ist, sowie andererseits über eine erste Zenerdiode mit dem negativem Pol des ersten Kondensators, mit einem positivem Wert für die vorgesehene Zenerspannung der ersten Zenerdiode am Gate,
- bei welchem das Koppelelement ein optisch schaltbares Schaltelement aufweist, mittels dessen bei Vorliegen des optischen Signales das Gate und die Source verbindbar sind.

In einer vorteilhaften Weise ist eine einfache Schaltungsanordnung erzielbar. Weitere Vorteile ergeben sich daraus, daß ein N-Kanal-MOSFET verwendbar ist, welcher kostengünstig ist insbesondere im Vergleich zu einem P-Kanal-MOSFET. Der N-Kanal-MOSFET wird dabei so eingesetzt, daß bei Vorliegen des optischen Signales, also falls die Eingangsspannung größer ist als die vorgesehene minimale Eingangsspannung, mittels des optisch schaltbaren Schaltelementes des Koppelelementes das Gate und die Source des N-Kanal-MOSFET verbunden werden, sodaß dadurch der N-Kanal-MOSFET gesperrt ist. Dadurch wird die Weiterversorgung aus der Energiespeichereinheit mittels der Zuschalteeinheit weggeschaltet. Bei der abgeschalteten Weiterversorgung kann somit die Energiespeichereinheit über die Spannungserzeugungseinheit aufgeladen werden.

Falls die Eingangsspannung ausfällt, also kleiner ist als die vorgesehene minimale Eingangsspannung, erlischt das optische Signal, und das optisch schaltbare Schaltelement des Koppelelementes wird aufgeschaltet, sodaß Gate und Source des N-Kanal-MOSFET nicht mehr verbunden sind. Der N-Kanal-MOSFET wird über den ersten Widerstand als Gatevorwiderstand aufgesteuert. Diese Gatevorspannung wird dabei durch die erste Zenerdiode begrenzt. Die zweite Diode verhindert einen Stromfluß durch eine im N-Kanal-MOSFET integrierte Reversediode. Die erste Diode soll ein Abfließen der Energiereserve-Ladung vom ersten Schaltungspunkt zu den Stromzuführungselementen verhindern. Dadurch kann in einer vorteilhaften Weise die Energiespeichereinheit für die Weiterversorgung mittels des N-Kanal-MOSFET angeschaltet werden, wobei über die erste und zweite Diode das Abfließen der Energiereserve-Ladung zu den Stromzuführungselementen verhindert wird.

Ausführbar ist ein Sperrwandler, bei welchem ein zweiter Widerstand vorgesehen ist zwischen dem zweiten Schaltungspunkt und der Gleichrichterschaltung.

In einer vorteilhaften Weise kann die Stromentnahme aus dem Übertrager bei der Aufladung der Energiespeichereinheit mittels dieses zweiten Widerstandes in einfacher Weise begrenzt werden, insbesondere bei einem entladenen Energiespeicher. Eine derartige Begrenzung kann beispielsweise auch vorgesehen sein durch eine geeignete Auslegung der Kapazitätswerte und der Baugröße (billig, klein) von den Kondensatoren von der vervielfachenden Gleichrichterschaltung, insbesondere durch Erzielung einer hohen Impedanz bei einer für den Sperrwandler vorgesehenen Schaltfrequenz des Schaltelementes.

Ausführbar ist ein Sperrwandler, bei welchem eine zweite Zenerdiode vorgesehen ist zur Spannungsbegrenzung bei der Aufladung des ersten Kondensators.

In einer vorteilhaften Weise kann vermieden werden, daß eine Energiereserveversorgungsspannung am ersten Kondensator gebildet wird, welche eine zulässige maximale Eingangsspannung überschreitet. Insbesondere kann der zweite Widerstand, welcher zur Strombegrenzung bei der Spannungserzeugung vorgesehen ist, auch für die Strombegrenzung bei der zweiten Zenerdiode verwendet werden.

Ausführbar ist ein Sperrwandler, bei welchem die Spannungserzeugungseinheit, die Energiespeichereinheit und die Zuschalteeinheit in einem Energiespeichermodul angeordnet sind.

In einer vorteilhaften Weise kann ein Sperrwandler in einfacher Weise nachgerüstet werden, indem dieser Energiespeichermodul eingebaut wird und an den drei Schaltungspunkten angeschlossen wird. Insbesondere bei einer Verwendung des optischen Koppelelementes der Zuschalteeinheit kann dieses bei einem Sperrwandler mit einer insbesondere bereits vorhandenen Eingangsspannungsüberwachungseinheit mit optischer Anzeige zur Sichtkontrolle einer normalen Funktionsweise an dieser optischen Anzeige, beispielsweise einer LED, in einfacher Weise beispielsweise in Serie angeschlossen werden. Falls die erste Diode nicht ohnehin bereits vorhanden ist, so kann diese beim Nachrüsten eingefügt werden.

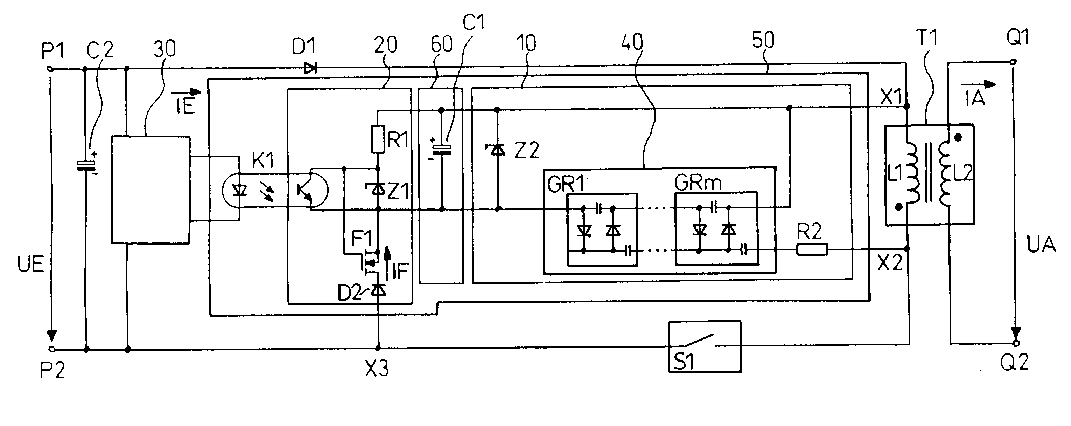

Bevorzugte Ausführungsbeispiele der Erfindung werden anhand der Figur näher erläutert.

Die Figur zeigt einen Eintakt-Sperrwandler.

Im Zusammenhang mit der Figur und der Beschreibung wird nachfolgende Bezugszeichentabelle verwendet.

Bezugszeichentabelle

| | |
|---|---|
| T1 | Übertrager |
| L1 | Primärwicklung des Übertragers |
| L2 | Sekundärwicklung des Übertragers |
| P1, P2 | Stromzuführungspunkt |
| Q1, Q2 | Stromentnahmepunkt |
| UE | Eingangsspannung |
| UA | Ausgangsspannung |
| IE | Eingangsstrom, insbesondere bei abgeschalteter Weiterversorgung |
| IF | Weiterversorgungsstrom, insbesondere bei angeschalteter Weiterversorgung |
| IA | Ausgangsstrom |
| $U_{min}$ | minimale Eingangsspannung |
| $U_{max}$ | maximale Eingangsspannung |
| $I_a$ | Abgabestrom bei einem Verbraucher |
| $U_a$ | Abgabespannung bei einem Verbraucher |
| E | Energie |
| C | Kapazität |
| eta | Wirkungsgrad |
| $t_w$ | Zeitdauer |
| S1 | Schaltelement |
| C1, C2 | Kondensator |
| D1, D2 | Diode |
| F1 | N-Kanal-MOSFET |
| R1, R2 | Widerstand |
| K1 | optisches Koppelelement |
| Z1, Z2 | Zenerdiode |
| GR1, ... GRm | Gleichrichterstufe, insbesondere bei einer bekannten Greinacher-Kaskadenschaltung |
| X1, X2, X3 | Schaltungspunkt |
| 10 | Spannungserzeugungseinheit |
| 20 | Zuschalteeinheit |
| 30 | Eingangsspannungsüberwachungseinheit |
| 40 | Gleichrichterschaltung |
| 50 | Energiespeichermodul |
| 60 | Energiespeichereinheit |

Wie die Figur zeigt, ist bei einem Ausführungsbeispiel für einen Sperrwandler beispielsweise eine Sperrwandlerschaltung für einen Eintakt-Sperrwandler vorgesehen, bei welchem ein Ubertrager T1 und ein Schaltelement S1 verwendet wird. Der Ubertrager T1 besteht beispielsweise aus einer Primärwicklung L1 und einer Sekundärwicklung L2 mit einem entgegengesetzten Wicklungssinn. Zwischen einem ersten Stromzuführungspunkt P1 und einem zweiten Stromzuführungspunkt P2 ist eine Eingangsspannung UE vorgesehen. Für die Eingangsspannung UE ist ein Eingangsspannungsbereich vorgesehen zwischen einer vorgesehenen minimalen Eingangsspannung $U_{min}$ und einer vorgesehenen maximalen Eingangsspannung $U_{max}$. Bei Normalbetrieb, also falls die Eingangsspannung UE einen Spannungswert innerhalb des vorgesehenen Eingangsspannungsbereichs aufweist, ist bei durchgeschaltetem Schaltelement S1 ein Eingangsstrom IE vorgesehen vom ersten Stromzuführungspunkt P1 über die Primärwicklung L1 des Ubertragers T1 sowie über das Schaltelement S1, welches in Serie der Primärwicklung L1 nachgeschaltet ist, zum zweiten Stromzuführungspunkt P2. Zwischen dem ersten Stromzuführungspunkt P1 und der Primärwicklung L1 ist eine erste Diode D1 vorgesehen mit einer vorgesehenen Stromrichtung für die erste Diode D1 vom ersten Stromzuführungspunkt P1 zur Primärwicklung L1. Zwischen der ersten Diode D1 und der Primärwicklung L1 ist ein erster Schaltungspunkt X1 vorgesehen. Zwischen der Primärwicklung L1 und dem Schaltelement S1 ist ein zweiter Schaltungspunkt X2 vorgesehen. Zwischen dem Schaltelement S1 und dem zweiten Stromzuführungspunkt P2 ist ein dritter Schaltungspunkt X3 vorgesehen. In einer Schaltphase, also bei durchgeschaltetem Schaltelement S1, ist somit ein Strom über die Primärwicklung L1 vorgesehen, wobei an der Primärwicklung L1 eine Spannung auftritt, also zwischen dem ersten Schaltungspunkt X1 und dem zweiten Schaltungspunkt X2, mit einer Polarität für diese Spannung, welche der Polarität der Eingangsspannung UE entspricht. In einer Sperrphase, also bei gesperrtem Schaltelement S1, ist ein Ausgangsstrom IA durch die Sekundärwicklung L2 vorgesehen, welche zwischen einem ersten Stromentnahmepunkt Q1 und einem Stromentnahmepunkt Q2 angeordnet ist. Insbesondere gemäß einer Verwendung von Gleichrichterelementen im Sekundärkreis soll dabei der Ausgangsstrom IA vom zweiten Stromentnahmepunkt Q2 über die Sekundärwicklung L2 zum ersten Stromentnahmepunkt Q1 fließen. Zwischen dem ersten Stromentnahmepunkt Q1 und dem zweiten Stromentnahmepunkt Q2 ist eine Ausgangsspannung UA vorgesehen. Der erste Stromzuführungspunkt P1 kann somit wie ein positiver Pol betrachtet werden gegenüber dem zweiten Stromzuführungspunkt P2. Der erste Stromentnahmepunkt Q1 kann somit wie ein positiver Pol betrachtet werden gegenüber dem zweiten Stromentnahmepunkt Q2.

Es können in der Figur nicht dargestellte Regeleinrichtungen vorgesehen sein, sodaß bei jeder Eingangsspannung UE innerhalb des vorgesehenen Eingangsspannungsbereichs stets ein vorgesehener mittlerer Abgabestrom $I_a$ bei einer mittleren Abgabespannung $U_a$ für einen im Sekundärkreis vorgesehenen in der Figur nicht dargestellten Verbraucher verfügbar gehalten werden kann, indem beispielsweise eine Regelung so vorgesehen ist, daß beim Schaltelement S1 eine Zeitdauer von Schaltphase und/oder Sperrphase geändert werden kann.

Gelingt es somit beim Ausfall der Eingangsspannung UE eine Weiterversorgung aufrecht zu erhalten, sodaß zwischen dem ersten Schaltungspunkt X1 und dem dritten Schaltungspunkt X3 eine Spannung innerhalb des vorgesehenen Eingangsspannungsbereichs verfügbar bleibt, indem bei der Weiterversorgung insbesondere der ausgefallene Eingangsstrom IE ersetzbar ist mittels eines Weiterversorgungsstromes IF, so ist damit die erwähnte Regelung auch während der Weiterversorgung ermöglicht, sodaß der erwähnte Verbraucher wie vorgesehen verwendet werden kann.

Zur Überwachung des vorgesehenen Eingangsspannungsbereichs von der Eingangsspannung UE ist eine Eingangsspannungsüberwachungseinheit 30 vorgesehen. Im Normalbetrieb, also bei einem Spannungswert für die Eingangsspannung UE innerhalb des vorgesehenen Eingangsspannungsbereichs, soll von der Eingangsspannungsüberwachungseinheit 30 in einem optischen Koppelelement K1 ein optisches Signal erzeugbar sein. Bei einem Ausfall der Eingangsspannung UE, also insbesondere falls die Eingangsspannung UE die vorgesehene minimale Eingangsspannung des vorgesehenen Eingangsspannungsbereichs unterschreitet, soll dieses optische Signal ebenfalls ausfallen. Beim Ausfall dieses optischen Signales soll eine Weiterversorgung erfolgen können zumindest für eine bestimmte Zeitdauer.

Zur Weiterversorgung dient ein Energiespeichermodul 50. Im Energiespeichermodul 50 ist eine Spannungserzeugungseinheit 10, eine Zuschalteeinheit 20, sowie eine Energiespeichereinheit 60 vorgesehen. Die Spannungserzeugungseinheit 10 dient insbesondere im Normalbetrieb zur Aufladung der Energiespeichereinheit 60. Mittels der Zuschalteeinheit 20 wird die Energiespeichereinheit 60, also die Weiterversorgung, während des Normalbetriebes weggeschaltet. Beim Ausfall der Eingangsspannung UE wird dies über das optische Koppelelement K1 durch den Ausfall des optischen Signales von der Eingangsspannungsüberwachungseinheit 30 zur Zuschalteeinheit 20 signalisiert, sodaß diese die Energiespeichereinheit 60 für die Weiterversorgung anschaltet.

In der Energiespeichereinheit 60 ist beispielsweise ein erster Kondensator C1 vorgesehen, welcher insbesondere beim Normalbetrieb aufgeladen wird, und bei der Weiterversorgung entladen wird. Der Kondensator C1 soll im Normalbetrieb bis zur maximalen Eingangsspannung $U_{max}$ aufgeladen werden. Beim Ausfall der Eingangsspannung UE, also bei angeschalteter Weiterversorgung, wird der Kondensator C1 entladen und erreicht nach einer Zeitdauer $t_w$, während welcher im Sekundärkreis ein mittlerer Abgabestrom $I_a$ bei einer mittleren Abgabespannung $U_a$ fließt, also insbesondere im Sinne einer Mittelwertbildung gemäß $\Sigma (I_a \cdot U_a)$. die minimale Eingangsspannung $U_{min}$. Unter Berücksichtigung eines Wirkungsgrades eta soll demzufolge mindestens ein Kapazitätswert C für den Kondensator C1 gemäß folgender Formel vorliegen:

$$C = \frac{2 \cdot t_w \cdot \Sigma (I_a \cdot U_a)}{(U_{max}^2 - U_{min}^2) \cdot eta}$$

Im Normalbetrieb kann der positive Pol (+) des Kondensators C1 ständig mit dem ersten Schaltungspunkt X1 verbunden sein. Zur Weiterversorgung soll der negative Pol (-) des Kondensators C1 mittels der Zuschalteeinheit 20 mit dem dritten Schaltungspunkt X3 verbunden werden.

In der Zuschalteeinheit 20 ist beispielsweise eine Schaltungsanordnung vorgesehen, bei welcher ein N-Kanal-MOSFET F1 eingesetzt ist. Das Drain des N-Kanal-MOSFET F1 ist über eine zweite Diode D2 mit dem dritten Schaltungspunkt X3 verbunden mit einer vorgesehenen Stromrichtung für die zweite Diode D2 vom dritten Schaltungspunkt X3 zum Drain. Die Source des N-Kanal-MOSFET F1 ist mit dem negativem Pol (-) des Kondensators C1 verbunden. Das Gate des N-Kanal-MOSFET F1 ist einerseits über einen ersten Widerstand R1 mit dem positivem Pol (+) des Kondensators C1 verbunden, so wie andererseits über eine erste Zenerdiode Z1 mit dem negativem Pol (-) des Kondensators C1. Es ist ein positiver Wert für die vorgesehene Zenerspannung der Zenerdiode Z1 am Gate des N-Kanal-MOSFET F1 vorgesehen. Das optische Koppelelement K1 soll ein optisch schaltbares Schaltelement aufweisen, mittels dessen bei Vorliegen des im Koppelelement K1 vorgesehenen optischen Signales das Gate und die Source des N-Kanal-MOSFET F1 verbindbar sind. Beim Vorliegen dieses optischen Signales, also im Normalbetrieb, ist somit Gate und Source des N-Kanal-MOSFET F1 verbunden, wodurch dieser gesperrt ist. Somit besteht keine Verbindung zwischen dem negativem Pol (-) des Kondensators C1 und dem dritten Schaltungspunkt X3. Beim Ausfall dieses optischen Signales, also bei der Weiterversorgung, ist somit Gate und Source des N-Kanal-MOSFET F1 nicht mehr verbunden. Der N-Kanal-MOSFET F1 wird über den Widerstand R1 als ein Gatevorwiderstand aufgesteuert. Dabei wird die Gatevorspannung über die Zenerdiode Z1 begrenzt. Die Diode D2 verhindert einen Stromfluß über eine Reversediode des N-Kanal-MOSFET F1, also insbesondere ein Abfließen der Energiereserve-Ladung über die Stromzuführungspunkte P1, P2 zu Stromzuführungselementen. Bei durchgeschaltetem N-Kanal-MOSFET F1 ist somit ein Weiterversorgungsstrom IF vom Drain zur Source des N-Kanal-MOSFET F1 vorgesehen. Die Diode D1 verhindert bei der Weiterversorgung ein Abfließen der Energiereserve-Ladung vom ersten Schaltungspunkt X1 über die Stromzuführungspunkte P1, P2 zu den Stromzuführungselementen.

Von der Spannungserzeugungseinheit 10 wird insbesondere beim Normalbetrieb die Energiespeichereinheit 60, also insbesondere der Kondensator C1 aufgeladen. Zur Erzeugung dieser Ladespannung ist eine Gleichrichterschaltung 40 eingesetzt, insbesondere eine Greinacher-Kaskadenschaltung, bestehend aus mehreren Gleichrichterstufen GRl ... GRm, welche in bekannter Weise hintereinander geschaltet sind und einerseits mit dem aufzuladenden Kondensator C1, sowie andererseits mit dem ersten Schaltungspunkt X1 und dem zweiten Schaltungspunkt X2 in bekannter Weise verbunden sind. Die zwischen den Schaltungspunkten X1 und X2 abgegriffene Spannung der Primärwicklung L1, welche sich umpolt bei jeder Änderung des Schaltzustandes des Schaltelementes S1, wird in bekannter Weise von den Gleichrichterstufen GRl, ... GRm verwendet zur Erzeugung der Ladespannung am Kondensator C1. Zur Strombegrenzung kann ein weglassbarer zweiter Widerstand R2 vorgesehen sein zwischen dem zweiten Schaltungspunkt X2 und der Gleichrichterschaltung 40. Zur Spannungsbegrenzung bei der Aufladung des Kondensators C1 kann eine weglassbare zweite Zenerdiode Z2 vorgesehen sein, welche mit dem positivem Pol (+) und dem negativem Pol (-) des Kondensators C1 verbunden ist.

Somit ist bei einem Sperrwandler eine Spannungserzeugungseinheit zur Aufladung einer Energiespeichereinheit, sowie eine Zuschalteeinheit zum Anschalten der Energiespeichereinheit für die Weiterversorgung bei Unterschreitung einer minimalen Eingangsspannung vorgesehen. Eine derartige Schaltung kann bei einem bekannten Sperrwandler in einfacher Weise nachgerüstet werden, indem insbesondere ein Energiespeichermodul eingebaut wird, welcher in einfacher Weise anschließbar ist an insbesondere drei Schaltungspunkten.

## Patentansprüche

1. Sperrwandler mit einem Übertrager und einem Schaltelement, welches in Serie mit einer Primärwicklung des Übertragers und einer Entkopplungseinrichtung ($D_1$) an eine Eingangsspannungsquelle angeschlossen ist, bei dem eine Spannungserzeugungseinheit (10) zur Aufladung einer Energiespeichereinheit (60) an die Primärwicklung des Übertragers angeschlossen ist,

   - eingangsseitig eine Eingangsspannungs-Überwachungseinheit (30) vorgesehen ist, deren Ausgang mit einer Zuschalteeinheit (20) verbunden ist, die bei Unterschreiten einer minimalen Eingangsspannung (UE) die Energiespeichereinheit (60) an die Primärwicklung des Sperrwandlers anschaltet.

2. Sperrwandler nach Anspruch 1, bei welchem ein erster Kondensator (C1) der Energiespeichereinheit (60) zur Aufladung vorgesehen ist.

3. Sperrwandler nach Anspruch 2, bei welchem eine vervielfachende Gleichrichterschaltung (40) der Spannungserzeugungseinheit (10) vorgesehen ist zur Spannungserzeugung aus einer an einem ersten (X1) und einem zweiten (X2) Schaltungspunkt entnommenen Spannung der Primärwicklung (L1).

4. Sperrwandler nach Anspruch 3,

   - bei welchem ein positiver Pol (+) des ersten Kondensators (C1) mit dem ersten Schaltungspunkt (X1) verbunden ist,
   - bei welchem ein negativer Pol (-) des ersten Kondensators (C1) mit dem zweiten Schaltungspunkt (X2) über die Gleichrichterschaltung (40) verbunden ist,
   - bei welchem als Entkopplungseinrichtung eine erste Diode (D1) vorgesehen ist zwischen einem ersten Stromzuführungspunkt (P1) und dem ersten Schaltungspunkt (X1) mit einer vorgesehenen Stromrichtung vom ersten Stromzuführungspunkt (P1) zum ersten Schaltungspunkt (X1),
   - bei welchem das Schaltelement (S1) zwischen dem zweiten Schaltungspunkt (X2) und einem dritten Schaltungspunkt (X3) vorgesehen ist, welcher mit einem zweiten Stromzuführungspunkt (P2) verbunden ist,
   - bei welchem über die Zuschalteeinheit (20) der negative Pol (-) des ersten Kondensators (C1) mit dem dritten Schaltungspunkt (X3) bei der Weiterversorgung verbunden ist.

5. Sperrwandler nach Anspruch 4,

   - bei welchem eine Eingangsspannungsüberwachungseinheit (30) vorgesehen ist zur Überwachung der minimalen Eingangsspannung (UE),
   - bei welchem ein optisches Koppelelement (K1) zwischen der Eingangsspannungsüberwachungseinheit (30) und der Zuschalteeinheit (20) vorgesehen ist zur Weitergabe eines optischen Signales von der Eingangsspannungsüberwachungseinheit (30) zur Zuschalteeinheit (20), indem dieses optische Signal nicht vorgesehen ist im Falle, daß die minimale Eingangsspannung (UE) unterschritten ist.

6. Sperrwandler nach Anspruch 5,

   - bei welchem ein N-Kanal-MOSFET (F1) der Zuschalteeinheit (20) vorgesehen ist,
   - bei welchem ein Drain des N-Kanal-MOSFET (F1) über eine zweite Diode (D2) mit dem dritten Schaltungspunkt (X3) verbunden ist, mit einer vorgesehenen Stromrichtung für die zweite Diode (D2) vom dritten Schaltungspunkt (X3) zum Drain,

- bei welchem eine Source des N-Kanal-MOSFET (F1) mit dem negativem Pol (-) des ersten Kondensators (C1) verbunden ist,
- bei welchem ein Gate des N-Kanal-MOSFET (F1) einerseits über einen ersten Widerstand (R1) mit dem positivem Pol (+) des ersten Kondensators (C1) verbunden ist, sowie andererseits über eine erste Zenerdiode (Z1) mit dem negativem Pol (-) des ersten Kondensators (C1), mit einem postivem Wert für die vorgesehene Zenerspannung der ersten Zenerdiode (Z1) am Gate,
- bei welchem das Koppelelement (K1) ein optisch schaltbares Schaltelement aufweist, mittels dessen bei Vorliegen des optischen Signales das Gate und die Source verbindbar sind.

7. Sperrwandler nach einem der Ansprüche 3 bis 6, bei welchem ein zweiter Widerstand (R2) vorgesehen ist zwischen dem zweiten Schaltungspunkt (X2) und der Gleichrichterschaltung (40).

8. Sperrwandler nach einem der Ansprüche 2 bis 7, bei welchem eine zweite Zenerdiode (Z2) vorgesehen ist zur Spannungsbegrenzung bei der Aufladung des ersten Kondensators (C1).

9. Sperrwandler nach einem der Ansprüche 1 bis 8, bei welchem die Spannungserzeugungseinheit (10), die Energiespeichereinheit (60) und die Zuschalteeinheit (20) in einem Energiespeichermodul (50) angeordnet sind.


**Claims**

1. Flyback converter, having a transformer and having a switching element which is connected in series with a primary winding of the transformer and with a decoupling device (D1) to an input voltage source, in which a voltage generation unit (10) for charging an energy storage unit (60) is connected to the primary winding of the transformer,

   - an input voltage monitoring unit (30) is provided on the input side and its output is connected to a connection unit (20) which connects the energy storage unit (60) to the primary winding of the flyback converter if the voltage falls below a minimum input voltage (UE).

2. Flyback converter according to Claim 1, in which a first capacitor (C1) is provided in the energy storage unit (60), for charging.

3. Flyback converter according to Claim 2, in which a multiplying rectifier circuit (40) is provided in the voltage generation unit (10) for voltage generation from a voltage of the primary winding (L1) which is picked off at a first circuit point (X1) and a second circuit point (X2).

4. Flyback converter according to Claim 3,

   - in which a positive pole (+) of the first capacitor (C1) is connected to the first circuit point (X1),
   - in which a negative pole (-) of the first capacitor (C1) is connected to the second circuit point (X2) via the rectifier circuit (40),
   - in which a first diode (D1) is provided, as the decoupling device, between a first current feed point (P1) and the first circuit point (X1), having an intended current direction from the first current feed point (P1) to the first circuit point (X1),
   - in which the switching element (S1) is provided between the second circuit point (X2) and a third circuit point (X3) which is connected to a second current feed point (P2),
   - in which the negative pole (-) of the first capacitor (C1) is connected via the connection unit (20) to the third circuit point (X3), for further supply.

5. Flyback converter according to Claim 4,

   - in which an input voltage monitoring unit (30) is provided for monitoring the minimum input voltage (UE),
   - in which an optical coupling element (K1) is provided between the input voltage monitoring unit (30) and the connection unit (20), in order to pass on an optical signal from the input voltage monitoring unit (30) to the connection unit (20), in that this optical signal is not provided in the case when the voltage is below the minimum input voltage (UE).

6. Flyback converter according to Claim 5,

   - in which an N-channel MOSFET (F1) of the connection unit (20) is provided,
   - in which a drain of the N-channel MOSFET (F1) is connected via a second diode (D2) to the third circuit point (X3), having an intended current direction for the second diode (D2) from the third circuit point (X3) to the drain,
   - in which a source of the N-channel MOSFET (F1) is connected to the negative pole (-) of the first capacitor (C1),
   - in which a gate of the N-channel MOSFET (F1) is connected on the one hand via a first resistor (R1) to the positive pole (+) of the first capacitor (C1) and is connected on the other hand via a first zener diode (Z1) to the negative pole (-) of the first capacitor (C1), with a positive value for the intended zener voltage of the first zener diode (Z1) at the gate,

- in which the coupling element (K1) has an optically switchable switching element by means of which the gate and the source can be connected when the optical signal is present.

7. Flyback converter according to one of Claims 3 to 6, in which a second resistor (R2) is provided between the second circuit point (X2) and the rectifier circuit (40).

8. Flyback converter according to one of Claims 2 to 7, in which a second zener diode (Z2) is provided for voltage limiting during charging of the first capacitor (C1).

9. Flyback converter according to one of Claims 1 to 8, in which the voltage generation unit (10), the energy storage unit (60) and the connection unit (20) are arranged in an energy storage module (50).

**Revendications**

1. Convertisseur à récupération, comportant un transformateur et un élément d'interruption qui est branché, en série avec un enroulement primaire du transformateur et avec un dispositif de découplage (D1), à une source de tension d'entrée, dans lequel

- une unité (10) génératrice de tension destinée à la charge d'une unité (60) accumulatrice d'énergie est raccordée à l'enroulement primaire du transformateur,
- il est prévu en entrée une unité (30) de contrôle de tension d'entrée, dont la sortie est reliée à une unité (20) de branchement qui branche l'unité accumulatrice d'énergie (60) sur l'enroulement primaire du convertisseur lorsque la tension d'entrée (UE) est inférieure à une tension minimale.

2. Convertisseur à récupération selon la revendication 1, dans lequel un premier condensateur (C1) de l'unité accumulatrice d'énergie (60) est prévu pour la charge.

3. Convertisseur à récupération selon la revendication 2, dans lequel il est prévu un montage redresseur (40) multiplicateur de l'unité génératrice de tension (10) pour la génération de la tension à partir d'une tension, prélevée en un premier point (X1) du circuit et en un second point (X2) du circuit, de l'enroulement primaire (L1).

4. Convertisseur à récupération selon la revendication 3, dans lequel

- un pôle positif (+) du premier condensateur (C1) est relié au premier point (X1) du circuit,
- un pôle négatif (-) du premier condensateur (C1) est relié au second point (X2) du circuit par l'intermédiaire du montage redresseur (40),
- une première diode (D1) est prévue comme dispositif de découplage entre un premier point (P1) d'alimentation en courant et le premier point (X1) de circuit avec un sens de courant prévu pour aller du premier point (P1) d'alimentation en courant au premier point (X1) de circuit,
- l'élément (S1) d'interruption est prévu entre le second point (X2) du circuit et un troisième point (X3) du circuit qui est relié à un second point (P2) d'alimentation en courant,
- le pôle négatif (-) du premier condensateur (C1) est relié par l'intermédiaire de l'unité de branchement (20) au troisième point (X3) du circuit lors de l'alimentation ultérieure.

5. Convertisseur à récupération selon la revendication 4, dans lequel

- une unité (30) de contrôle de tension d'entrée est prévue pour le contrôle de la tension d'entrée (UE) minimale,
- un élément (K1) de couplage optique est prévu entre l'unité (30) de contrôle de tension d'entrée et l'unité (20) de branchement pour la retransmission d'un signal optique de l'unité (30) de contrôle de tension d'entrée à l'unité de branchement (20), par le fait que ce signal optique n'est pas prévu lorsque l'on passe sous la tension d'entrée (UE) minimale.

6. Convertisseur à récupération selon la revendication 5, dans lequel

- un transistor (F1) à effet de champ MOS à canal N de l'unité de branchement (20) est prévu,
- un drain du transistor (F1) à effet de champ MOS à canal N est relié par l'intermédiaire d'une seconde diode (D2) au troisième point (X3) du circuit, un sens de courant allant du troisième point (X3) du circuit au drain étant prévu pour la seconde diode (D2),
- une source du transistor (F1) à effet de champ MOS à canal N est reliée au pôle négatif (-) du premier condensateur (C1),
- une grille du transistor (F1) à effet de champ MOS à canal N est reliée d'une part par l'intermédiaire d'une première résistance (R1) au pôle positif (+) du premier condensateur (C1) et d'autre part par l'intermédiaire d'une première diode Zener (Z1) au pôle négatif (-) du premier condensateur (C1), la tension Zener prévue de la première diode Zener (Z1) à la grille ayant une valeur positive,

- l'élément (K1) de couplage comporte un élément d'interruption qui peut être commuté de manière optique et au moyen duquel la grille et la source peuvent être reliées lorsque le signal optique est présent.

7. Convertisseur à récupération selon l'une des revendications 3 à 6, dans lequel une seconde résistance (R2) est prévue entre le second point de circuit (X2) et le circuit redresseur (40).

8. Convertisseur à récupération selon l'une des revendications 2 à 7, dans lequel une seconde diode Zener (Z2) est prévue pour limiter la tension lors de la charge du premier condensateur (C1).

9. Convertisseur à récupération selon l'une des revendications 1 à 8, dans lequel l'unité (10) génératrice de tension, l'unité (60) accumulatrice d'énergie et l'unité (20) de branchement sont agencées dans un module (50) accumulateur d'énergie.